# EUROPÄISCHE PATENTSCHRIFT

(11) **EP 1 588 845 B1**
(45) Veröffentlichungstag und Bekanntmachung des Hinweises auf die Patenterteilung: **11.03.2009**
(21) Anmeldenummer: 04405247.0
(22) Anmeldetag: 22.04.2004
(51) Int. Cl.: B32B 27/36, B65D 77/20, B65D 65/02, B65D 65/40

(54) **Verpackungsfolie**
Packaging film
Feuille d'emballage

(43) Veröffentlichungstag der Anmeldung: 26.10.2005
(73) Patentinhaber: Alcan Technology & Management Ltd., 8212 Neuhausen am Rheinfall (CH)
(72) Erfinder: Jacob, Christophe, 67700 Saint Jean Saverne (FR); Gribling, Raymond, 57445 Reding (FR)

(56) Entgegenhaltungen:
- EP-A- 0 468 864
- EP-A- 0 488 452
- EP-A- 0 514 803
- WO-A-00/16975
- GB-A- 2 280 416
- PATENT ABSTRACTS OF JAPAN Bd. 1999, Nr. 09, 30. Juli 1999 (1999-07-30) & JP 11 115104 A (DAINIPPON PRINTING CO LTD), 27. April 1999 (1999-04-27)

## Beschreibung

Die Erfindung betrifft eine Verpackungsfolle nach dem Oberbegriff des Anspruchs 1.

Bekannte Deckfolien zum Verschliessen von Behältern aus Kunststoff durch Heissslegeln der Folie gegen den Behälterrand sind beschichtete oder unbeschichtete Aluminiumfolien sowie verschiedene Verbundfolien aus Papier und PET oder Papier/Aluminium-Laminate.

Eine Verpackungsfolle der eingangs genannten Art ist aus EP-A-0 514 803, GB-A-2 280 416, EP-A-0 468 864 und WO 00/116975 A bekannt.

Der Erfindung liegt die Aufgabe zugrunde eine Verpackungsfolie der eingangs genannten Art zu schaffen, die gegenüber herkömmlichen Verpackungsfollen ein geringeres Gewicht aufweisen und damit zu einer niedrigeren Ökosteuer führen. Weiter soll die Verpackungsfolie einen Hochglanzdruck ermöglichen, den Schutz der Bedruckung garantieren und ein Kleben der Folie an den Siegelwerkzeugen verhindern. Zudem soll die Verpackungsfolie auf schnell laufenden FFS-Maschinen einsetzbar sein.

Zur erfindungsgemässen Lösung der Aufgabe führt eine Verpackungsfolie mit den Merkmalen des Anspruchs 1.

Eine bevorzugte Heisssiegelschicht ist auf einem Lack auf der Basis von Copolymeren aus Ethylen und Vinylacetat, Vinylacetat und Vinylchlorid oder auf der Basis von Acrylat aufgebaut. Die Heisssiegelschicht kann auch eine Extrusionsbeschichtung sein.

Die mit der Bedruckung versehene Seite des ersten PET-Films kann auf der Folienaussenseite liegen und ist in diesem Fall mit einer hitzebeständigen Schutzlackschicht versehen. Der zweite PET-Film kann metallisiert sein. Der erste PET-Film mit der Bedruckung kann ebenfalls metallisiert sein.

Die Metallisierung Ist hier das bevorzugte Verfahren, dem PET-Film und damit der Verpeckungefolle Barriereeigenschaften zu verleihen und damit den Durchtritt von Flüssigkeiten, Gasen, Dämpfen, Wasserdampf, Aromen oder Geruchstoffen zu verhindern. Eine bevorzugte Metallisierung besteht aus Aluminium, das beispielsweise durch Sputtern oder durch Abscheidung aus dem Vakuum auf den ersten oder zweiten PET-Film in einer Dicke von etwa 10 nm bis etwa 2 µm aufgetragen wird.

Das Bedrucken des ersten PET-Films kann mit allen bekannten Druckverfahren vorgenommen werden, so z.B. Buch-, Offset-, Flexo-, Sieb-, Hello- und Kupfer tiefdruck, aber auch Laserdruck, Inkjet, elektrofotografische und magnetografische Druckverfahren. Die Wahl, welches Druckverfahren zur Anwendung kommt, hängt von der gewünschten Druckqualität, von den jeweiligen technischen Gegebenheiten und der Auflagenhöhe ab. Die Schutzlackschicht schützt das Druckbild, wenn dieses auf der Follenaussenseite liegt.

Die mit der Bedruckung versehene Seite des ersten PET-Films kann auch auf der Folieninnenseite liegen, wobei in diesem Fall der erste PET-Film transparent ist.

Der zweite PET-Film mit der Helsssiegelschicht kann metallisiert sein.

Bevorzugt enthält die Klebstoffschicht einen für Schneidmesser geeigneten Schmierstoff, z.B. ein Pulver aus TIO₂, Insbesondere ein Pulver mit TIO₂ -Partikeln mit einer mittleren Komgrösse von etwa 1 bis10 µm.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 den Schichtaufbau einer nicht erfindungsgemässen ersten Ausführungsform einer Verpackungsfolie in Hochglanzqualität;
- Fig. 2 den Schichtaufbau einer erfindungsgemässen zweiten Ausführungsform einer Verpackungsfolle zur Verwendung als Vormaterial;
- Fig. 3 den Schichtaufbau einer nicht erfindungsgemässen dritten Ausführungsform einer Verpackungsfolie mit hoher Barrierequalität;
- Fig. 4 den Schichtaufbau einer nicht erfindungsgemässen alternativen Ausführungsform einer Verpackungsfolle mit hoher Barrieregualität.

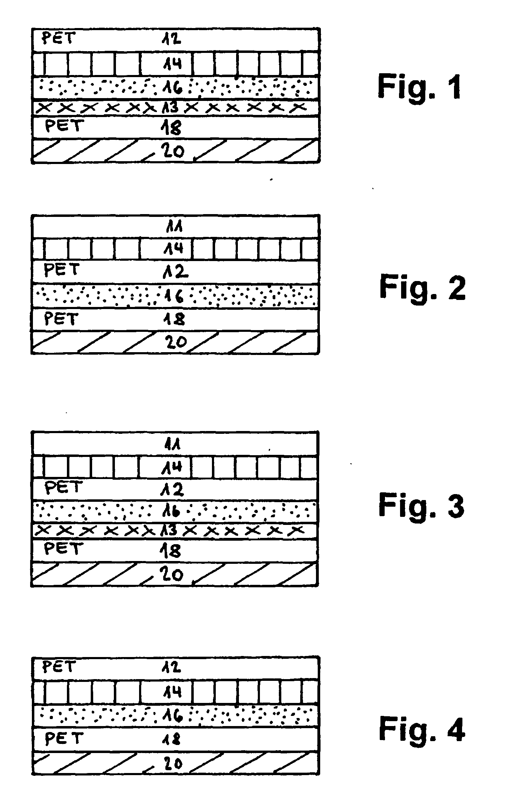

Die in den Fig. 1,3 und 4 dargestellten, nicht erfindungsgemässen Ausführungsbeispiele sollen das Verständnis der Erfindung erleichtern. Eine Verpackungsfolle in Hochglanzqualität weist gemäss Fig. 1 folgenden Aufbau auf:
- 12: erster PET-Film, transparent, 6 bis 36 µm, z.B. 12 µm
- 14: Bedruckung, z.B. durch Helio- oder Flexografle
- 16: Klebstoffschicht, hergestellt durch Auftrag von
- In Lösungsmittel gelöstem Klebstoff, 2,0 bis 4,0 g/m², oder
- Klebstoff ohne Lösungsmittel, 1,3 bis 2,0 g/m², oder
- wässriger Klebstofflösung, 0,9 bis 6,0 g/m²,
mit einem Zusatz von TiO₂
- 13: Barriereschicht aus Aluminium, im Vakuum auf den zweiten PET-Film 18 aufgedampft, 10 nm bis 2 µm,
- 18: zweiter PET-Film, transparent, 6 bis 36 µm, z.B. 12 µm
- 20: Helssslegelschicht, hergestellt durch Auftrag eines Lackes auf der Basis von
- Copolymeren aus Ethylen und Vinylacetat, 4,0 ± 0,5 g/m², oder
- Copolymeren aus Vinylacetat und Vinylchlorid, 4, 0 ± 0.5 g/m², oder
- Acrylat, 4, 0 ± 0,5 g/m²

Bei der Herstellung der Verpackungsfolie wird zunächst der als Druckträger dienende transparente erste PET-Film 12 bedruckt. Der zweite transparente PET-Film 18 wird auf einer Seite mit der Helssslegelschicht 20 und auf der anderen Seite mit der Barriereschicht 13 und darüber mit der Klebstoffschicht 16 mit einem Zusatz von TiO₂ -Pulver versehen. Anschliessend wird der mit der Heisssiegelschicht 20 versehene transparente metallisierte zweite PET-Film 18, 13 über die Klebstoffschicht 16 mit dem bedruckten transparenten ersten PET-Film 12, 14 zur Verpackungsfolie verklebt.

Die unbedruckte Seite des transparenten ersten PET-Films 12 bildet die spätere Aussenselte, die auf den transparenten metallisierten zweiten PET-Film 18, 13 aufgetragene Heisssiegelschicht 20 die Innenseite eines mit der Verpackungsfolle verschlossenen Behälters.

Eine Verpackungsfolle zur Verwendung als Vormaterial weist gemäss Fig. 2 folgenden Aufbau auf:
- 11: Schutzlackschicht aus einem Nitrocelluloselack, 1,1 ± 0,5 g/m²
- 14: Bedruckung, z.B. durch Helio- oder Flexografie
- 12: erster PET-Film, welss, 6 bis 36 µm, z.B. 12 µm
- 16: Klebstoffschicht, hergestellt durch Auftrag von
- In Lösungsmittel gelöstem Klebstoff, 2,0 bis 4,0 g/m², oder
- Klebstoff ohne Lösungsmittel, 1,3 bis 2,0 g/m², oder
- wässriger Klebstofflösung, 0,9 bis 6,0 g/m²,
mit einem Zusatz von TiO₂
- 18: zweiter PET-Film, transparent, 6 bis 36 µm, z.B. 12 µm
- 20: Heisssiegelschlcht, hergestellt durch Auftrag eines Lackes auf der Basis von
- Copolymeren aus Ethylen und Vinylacetat, 4,0 ± 0,5 g/m², oder
- Copolymeren aus Vinylacetat und Vinylchlorid, 4, 0 ± 0,5 g/m², oder
- Acrylat, 4, 0 ± 0,5 g/m²

Die in Fig. 2 gezeigte zweite Ausführungsform einer Verpackungsfolie unterscheidet sich von der In Fig. 1 gezeigten Ausführungsform dadurch, dass der bedruckte erste PET-Film 12, 14 weiss ist und die Bedruckung 14 mit der Schutzlackschicht 11 die spätere Aussenseite, die auf den transparenten zweiten PET-Film 18 aufgetragene Heisssiegelschicht 20 die Innenseite eines mit der Verpackungsfolie verschlossenen Behälters bildet. Bei dieser Ausführungsform ist eine Schutzlackschicht für die Bedruckung erforderlich. Zur Herstellung der Verpackungsfolie wird auf gleiche Weise wie bei der vorstehend beschriebenen Ausführungsform von Fig. 1 der bedruckte weisse erste PET-Film 12, 14 gegen den mit der Klebstoffschicht 16 versehenen transparenten zweiten PET-Film 18 geklebt.

Eine Verpackungsfolie mit hoher Barrierequalität weist gemäss Fig. 3 folgenden Aufbau auf:
- 11: Schutzlackschicht aus einem Nitrocelluloselack, 1,1 ± 0,5 g/m²
- 14: Bedruckung, z.B. durch Hello- oder Flexografie
- 12: erster PET-Film, transparent, 6 bis 36 µm, z.B. 12 µm
- 16: Klebstoffschicht, hergestellt durch Auftrag von
- In Lösungsmittel gelöstem Klebstoff, 2,0 bis 4,0 g/m², oder
- Klebstoff ohne Lösungsmittel, 1,3 bis 2,0 g/m², oder
- wässriger Klebstofflösung, 0,9 bis 6,0 g/m² ,
mit einem Zusatz von TIO₂
- 13: Barriereschicht aus Aluminium, im Vakuum auf den zweiten PET-Film 18 aufgedampft, 10 nm bis 2 µm,
- 18: zweiter PET-Film, transparent, 6 bis 36 µm, z.B. 12 µm
- 20: Heisssiegelschicht, hergestellt durch Auftrag eines Lackes auf der Basis von
- Copolymeren aus Ethylen und Vinylacetat, 4,0 ± 0,5 g/m², oder
- Copolymeren aus Vinylacetat und Vinylchlorid, 4, 0 ± 0,5 g/m², oder
- Acrylat, 4, 0 ± 0,5 g/m²

Bei der Herstellung der Verpackungsfolie wird zunächst der als Druckträger dienende transparente erste PET-Film 12 bedruckt. Anschllessend erfolgt der Auftrag der Schutzschicht 11. Der transparente zweite PET-Film 18 wird auf einer Seite mit der Heisssiegelschicht 20 und auf der anderen Seite mit der Barriereschicht 13 und darüber mit der Klebstoffschicht 16 versehen. Anschllessend wird der mit der Helsssiegelschicht 20 versehene transparente metallsierte zweite PET-Film 18 über die Klebstoffschicht 16 mit dem bedruckten und mit der Schutzschicht 11 versehenen weissen PET-Film 12, 14 zur Verpackungsfolie verklebt.

Eine alternative Verpackungsfolie weist gemäss Fig. 4 folgenden Aufbau auf:
- 12: erster PET-Film, transparent, 6 bis 36 µm, z.B. 12 µm
- 14: Bedruckung, z.B. durch Hello- oder Flexografie
- 16: Klebstoffschicht, hergestellt durch Auftrag von
- in Lösungsmittel gelöstem Klebstoff, 2,0 bis 4,0 g/m², oder
- Klebstoff ohne Lösungsmittel, 1,3 bis 2,0 g/m², oder
- wässriger Klebstofflösung, 0,9 bis 6,0 g/m²,
mit einem Zusatz von TIO₂
- 18: zweiter PET-Film, weiss, 6 bis 36 µm, z.B. 12 µm
- 20: Helassiegelschicht, hergestellt durch Auftrag eines Lackes auf der Basis von
- Copolymeren aus Ethylen und Vinylacetat, 4,0 ± 0,5 g/m², oder
- Copolymeren aus Vinylacetat und \/inylchlorid, 4, 0 ± 0,5 g/m², oder
- Acrylat, 4, 0 ± 0,5 g/m²

Die In Fig. 4 gezeigte alternative Verpackungsfolie unterscheidet sich von der in Fig. 3 gezeigten Ausführungsform dadurch, dass der bedruckte erste PET-Film 12, 14 transparent ist und der weisse zweite PET-Film 18 auf einer Seite mit der Heisssiegelschicht 20 und auf der anderen Seite mit der Klebstoff schicht 16 versehen ist.

## Patentansprüche

1. Verpackungsfolie zum Verschliessen von Behältern durch Heisssiegeln, mit zwei über eine Klebstoffschicht (16) miteinander verbundenen Filmen aus Polyethylenterephthalat (PET), wobei ein erster PET-Film (12) eine Bedruckung (14) und der zweite PET-Film (18) eine Heisssiegelschicht (20) aufweist,
**dadurch gekennzeichnet, dass**
(a) der erste PET-Flim (12) weiss ist und die mit der Bedruckung (14) versehene Seite auf der Follenaussenseite liegt und mit einer hitzebeständigen Schutzlackschicht (11) versehen ist, und der zweite PET-Film (18) transparent ist, oder
(b) der erste PET-Film (12) transparent ist und die mit der Bedruckung (14) versehene Seite auf der Folieninnenselte liegt und der zweite PET-Film (18) weiss ist.

2. Verpackungsfolie nach Anspruch 1, **dadurch gekennzeichnet, dass** der erste PET-Film (12) oder der zweite PET-Film (18) metallisiert ist.

3. Verpackungsfolle nach Anspruch 1 oder 2, **dadurch gekennzeichnet, dass** die Klebstoffschicht (16) einen für Schneidmesser geeigneten Schmierstoff enthält.

4. Verpackungsfolle nach Anspruch 3, **dadurch gekennzeichnet, dass** der Schmierstoff Titandioxid (TiO₂) ist.

5. Verpackungsfolle nach einem der Ansprüche 1 bis 4, **dadurch gekennzeichnet, dass** die Heisssiegelschicht (20) eine Extrusionsschicht ist.

## Claims

1. Packaging sheet for sealing containers by means of heat sealing having two films composed of polyethylene terephthalate (PET) connected to one another by an adhesive layer (16), wherein a first PET film (12) comprises an imprint (14) and the second PET film (18) a heat sealing layer (20), **characterised in that**
(a) the first PET film (12) is white and the side provided with the imprint (14) is located on the outside of the sheet and is provided with a heat-resistant protective varnish layer (11), and the second PET film (18) is transparent, or
(b) the first PET film (12) is transparent and the side provided with the imprint (14) is located on the inside of the sheet and the second PET film (18) is white.

2. Packaging sheet according to claim 1, **characterised in that** the first PET film (12) or the second PET film (18) is metallised.

3. Packaging sheet according to claim 1 or 2, **characterised in that** the adhesive layer (16) contains a lubricant suitable for cutting blades.

4. Packaging sheet according to claim 3, **characterised in that** the lubricant is titanium dioxide (TiO₂).

5. Packaging sheet according to any of claims 1 to 4, **characterised in that** the heat sealing layer (20) is an extrusion layer (20).

## Revendications

1. Feuille d'emballage destinée à la fermeture de récipients par scellage à chaud, comprenant deux films de polyéthylène-téréphtalate (PET) reliés l'un à l'autre par l'intermédiaire d'une couche d'adhésif (16), un premier film de PET (12) présentant une impression (14) et le deuxième film de PET (18) une couche de scellage à chaud (20),
**caractérisée en ce que**
a) le premier film de PET (12) est blanc et la face pourvue de l'impression (14) se trouve sur le côté extérieur de la feuille et est munie d'une couche de vernis de protection (11) résistante aux températures élevées, et le deuxième film de PET (18) est transparent, ou bien
b) le premier film de PET (12) est transparent et la face pourvue de l'impression (14) se situe sur le côté intérieur de la feuille, et le deuxième film de PET (18) est blanc.

2. Feuille d'emballage selon la revendication 1, **caractérisée en ce que** le premier film de PET (12) ou le deuxième film de PET (18) est métallisé.

3. Feuille d'emballage selon la revendication 1 ou 2, **caractérisée en ce que** la couche d'adhésif (16) renferme un lubrifiant adapté à une lame de coupe.

4. Feuille d'emballage selon la revendication 3, **caractérisée en ce que** le lubrifiant est de l'oxyde de titane (TiO₂) .

5. Feuille d'emballage selon l'une des revendications 1 à 4, **caractérisée en ce que** la couche de scellage à chaud (20) est une couche d'extrusion.
